# EUROPEAN PATENT APPLICATION

(11) **EP 3 832 471 A1**
(43) Date of publication of application: **09.06.2021**
(21) Application number: 19840082.2
(22) Date of filing: 17.07.2019
(51) Int. Cl.: G06F 13/00, H04N 21/44, H04N 21/462

(54) **CONTENT SHARING METHOD AND CONTENT SHARING SYSTEM**

(30) Priority: 27.07.2018 JP 2018141061
(71) Applicant: NIPPON TELEGRAPH AND TELEPHONE CORPORATION, Chiyoda-ku, Tokyo 100-8116, (JP)
(72) Inventor: WADA, Toshiki, Musashino-shi, Tokyo 180-8585 (JP); KODATE, Junichi, Musashino-shi, Tokyo 180-8585 (JP)
(74) Representative: Samson & Partner Patentanwälte mbB
(86) International application number: PCT/JP2019/028055
(87) International publication number: WO 2020/022136

(57) **Abstract**

An object is to provide a content sharing method and a content sharing system that make it possible for a user to share the whole of content including existing content by sharing only original content without sharing the existing content. The content sharing method includes: a first acquisition step of acquiring first content; a second acquisition step of acquiring second content stored in a first shared server and used in combination with the first content, via a communication network; and a reproduction step of reproducing the first content and the second content in combination with each other.

## Description

### Technical Field

The present invention relates to a content sharing method and a content sharing system.

### Background Art

Recently, due to development of content sharing means and content creation means, it has become common for not only professionals but also general users themselves to create content and share the content on a network. Meanwhile, at the time of creating content, it is necessary for a user to, in order to create new content utilizing existing content created by another person and share the new content, share the existing content created by the other person.

For example, when the user adds original dance video (original content) to an artist's musical composition (existing content) and share the pieces of content as one piece of video content, for example, on a network, not only the dance video created by the user as an original but also the artist's musical composition is also shared.

The sense of touch (see Non-Patent Literature 1) expected as a next-generation content element is also going to be utilized to enhance user experience of existing content in the present situation. Therefore, utilization in combination with existing content is assumed. In the present situation, there may be a case where, when a user shares content including the sense of touch, which has been created by the user as original content, on a network, the content is not established as one piece of content unless existing content created by another person is shared.

### Citation List

### Non-Patent Literature

Non-Patent Literature 1: "Forehead electrotactile display", Proceedings of the 11th Annual Conference of the Virtual Reality Society of Japan, pp. 1-4, 2006

### Summary of the Invention

### Technical Problem

The present invention has been made to solve the above problem, and an object is to provide a content sharing method and a content sharing system that make it possible for a user to share the whole of content including existing content by sharing only original content without sharing the existing content.

### Means for Solving the Problem

In order to solve the problem described above, a content sharing method according to the present invention includes: a first acquisition step of acquiring first content; a second acquisition step of acquiring second content stored in a first shared server and used in combination with the first content, via a communication network; and a reproduction step of reproducing the first content and the second content in combination with each other.

Further, a content sharing method according to the present invention includes: a first acquisition step of acquiring first content; a delivering step of delivering second content used in combination with the first content to a first shared server via a communication network; and the second content includes information with which the first content can be identified.

Further, in the content sharing method according to the present invention, at the first acquisition step, the first content stored in the first shared server may be acquired via the communication network.

Further, in the content sharing method according to the present invention, at the first acquisition step, the first content stored in a second shared server different from the first shared server may be acquired via the communication network.

Further, in the content sharing method according to the present invention, at the reproduction step, the first content and the second content may be reproduced in combination with each other by an information terminal apparatus; and at the first acquisition step, the first content may be acquired from a storage device included in the information terminal apparatus.

Further, in the content sharing method according to the present invention, at the delivering step, the second content may be delivered to the first shared server by an information terminal apparatus; and, at the first acquisition step, the first content may be acquired from a storage device included in the information terminal apparatus.

Further, in the content sharing method according to the present invention, the first content and the second content may include pieces of information with sensory modalities which are different from each other.

Further, a content sharing system according to the present invention is a content sharing system where a first information terminal apparatus, a second information terminal apparatus and a first shared server are connected to each other via a communication network, wherein the first information terminal apparatus includes: a first acquisition unit acquiring first content; and a delivering unit delivering second content used in combination with the first content to the first shared server; the first shared server includes a storage unit storing the first content delivered from the first information terminal apparatus, and is accessible from the first information terminal apparatus and the second information terminal apparatus via the communication network; and the second information terminal apparatus includes: a second acquisition unit acquiring the first content; a third acquisition unit acquiring the second content stored in the storage unit of the first shared server via the communication network; and a reproduction unit reproducing the first content and the second content in combination with each other.

### Effects of the Invention

According to the present invention, second content stored in a shared server and used in combination with first content is acquired via a communication network, and the first content and the second content are reproduced in combination with each other. Therefore, by sharing only original content without sharing existing content, a user can share the whole of content including the existing content.

### Brief Description of Drawings

[Fig. 1] Fig. 1 is a block diagram illustrating an outline of a content sharing system according to a present invention.
[Fig. 2] Fig. 2 is a block diagram illustrating an outline of a content sharing system according to a first embodiment of the present invention.
[Fig. 3] Fig. 3 is a block diagram showing a configuration of an information terminal apparatus according to the first embodiment of the present invention.
[Fig. 4] Fig. 4 is a block diagram showing a configuration of a shared server according to the first embodiment of the present invention.
[Fig. 5] Fig. 5 is a sequence diagram illustrating an operation of the content sharing system according to the first embodiment of the present invention.
[Fig. 6] Fig. 6 is a block diagram illustrating an outline of a content sharing system according to a second embodiment of the present invention.
[Fig. 7] Fig. 7 is a sequence diagram illustrating an operation of the content sharing system according to the second embodiment of the present invention.

### Description of Embodiments

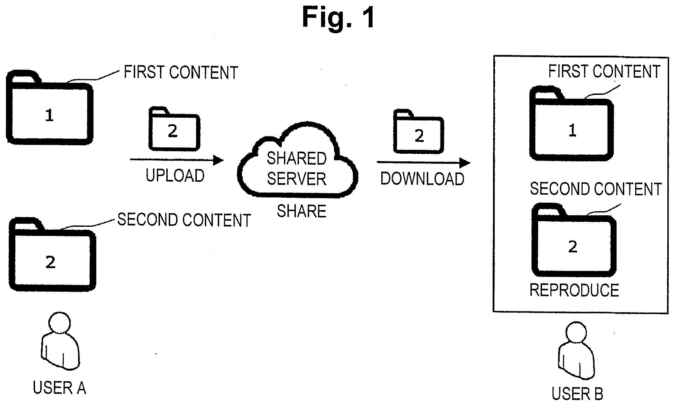

Preferred embodiments of the present invention will be described in detail below with reference to Figs. 1 to 7.

### [Outline of invention]

First, an outline of a content sharing system according to the present invention will be described with reference to Fig. 1. The content sharing system is constructed on a network. As shown in Fig. 1, second content, which is a new work to be used in combination with first content that is existing content, is created on a user A side, and shared (publicly published) on a network through a shared server. The content sharing system is configured so that each of the second content and the first content is separately acquired by another user, for example, a user B, and the first content and the second content can be reproduced in combination with each other on a user B side.

More specifically, the second content uploaded to the shared server from an information terminal apparatus on the user A side and publicly published is downloaded or streamed to an information terminal apparatus on the user B side from the shared server by the user B who is a reproducer. Further, on the information terminal apparatus on the user B side, the first content is acquired from outside or a storage device of the information terminal apparatus, and the first content and the second content are combined and reproduced as one piece of content as a whole.

The first content is existing content that has been already distributed, for example, and is, for example, digital content such as video and music. The second content is, for example, content configured to be coupled with the first content, and is composed of information recognizable by a person, for example, information about the sense of touch, the sense of smell, the sense of sight, the sense of taste, the sense of hearing and the like. By the second content being reproduced in combination with the first content, the pieces of content are established as one piece of content as a whole.

### [First embodiment]

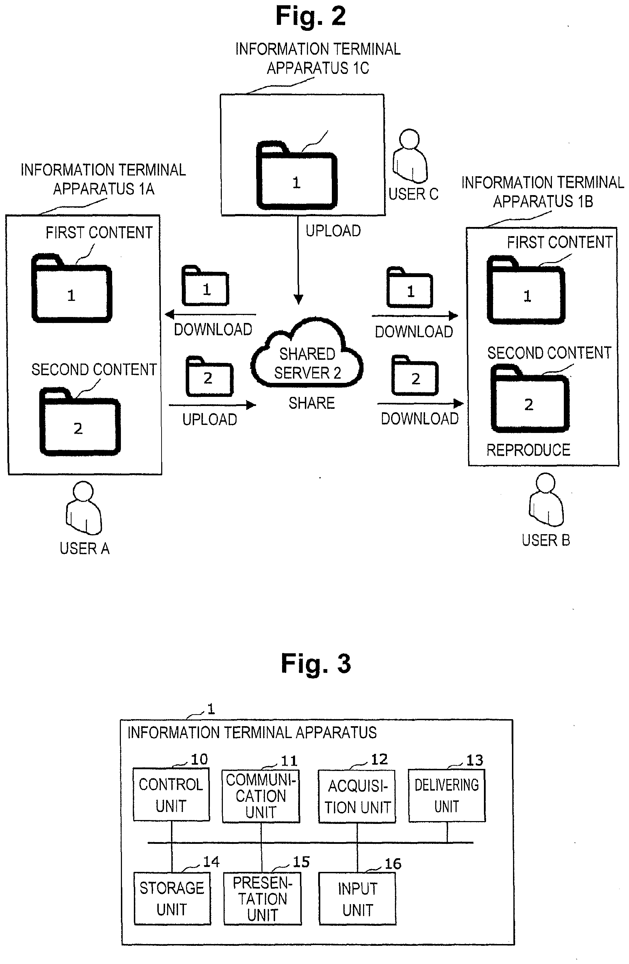

Fig. 2 is a block diagram showing a configuration of a content sharing system according to a first embodiment of the present invention. In the content sharing system according to the present embodiment, first content, which is existing content, has been uploaded to a shared server 2 by an information terminal apparatus 1C on a user C side in advance, and publicly published, that is, shared. Therefore, users A to C can access the shared server 2 and acquire the first content.

An information terminal apparatus 1A on a user A side acquires the first content from the shared server 2 by downloading or the like. The user A creates second content to be used in combination with the acquired first content. After that, the information terminal apparatus 1A uploads the created second content to the shared server 2.

Then, an information terminal apparatus 1B on a user B side accesses the shared server 2 and acquires each of the first content and the second content by downloading or the like. The information terminal apparatus 1B combines the acquired first content and second content to reproduce the pieces of content as one piece of content as a whole.

In the present embodiment, a description will be made on a case where the first content is video data such a movie, and the second content is content of tactile data coupled with the first content that is the video data. The tactile content constituting the second content is content that works on the human sense of touch using mechanical vibration, an electric stimulus such as a weak current having a predetermined frequency, a pressure stimulus or the like. For example, by presenting force, vibration, movement and the like to a user in time with the first content, which is video of fireworks, the moment the fireworks burst can be felt not only by the sense of sight and the sense of hearing but also by the sense of touch.

### [Configuration of information terminal apparatus]

Next, a configuration of the information terminal apparatuses 1A to 1C (hereinafter, these may be generically referred to as an information terminal apparatus 1) used by the users A to B, respectively, which are shown in Fig. 2, will be described.

The information terminal apparatus 1 is realized by a smartphone, a PC, a tablet terminal or the like. The information terminal apparatus 1 is provided with a control unit 10, a communication unit 11, an acquisition unit 12, a delivering unit 13, a storage unit 14, a presentation unit 15 and an input unit 16.

The control unit 10 is realized by a processor such as a CPU and a storage medium such as a ROM, a RAM and a flash memory, and executes various kinds of data processing according to a program stored in the storage medium or an external storage device. More specifically, the control unit 10 executes application software associated with a social media website or the like. Further, the control unit 10 is capable of generating, storing and reproducing a content file.

The communication unit 11 is composed of a control device for connecting the information terminal apparatus 1 and various kinds of external electronic equipment via a communication network.

The acquisition unit 12 acquires the first content and the second content from the shared server 2 via the communication unit 11. More specifically, the acquisition unit 12 accesses a content download site of the shared server 2 based on an instruction of the control unit 10. For example, the user A performs an operation for retrieving the first content and causing the retrieved first content to be downloaded, by operating the application software. In response to this operation, the acquisition unit 12 transmits a download request to the shared server 2. The acquisition unit 12 receives data of the first content specified with the download request, from the shared server 2. Note that the acquisition unit 12 may acquire data for streaming reproduction, in which files of the first content and the second content are divided on a capacity basis.

The delivering unit 13 delivers the first content and the second content to the shared server 2 via the communication unit 11. More specifically, the delivering unit 13 accesses a content upload site of the shared server 2 based on an instruction of the control unit 10. For example, the user A uploads the file of the second content created by the user A himself and stored in the storage unit 14 to the shared server 2. The file of the second content uploaded at this time includes information indicating that the second content corresponds to the first content. For example, identification information with which the first content can be identified or a URL where the first content is shared is set for the file of the second content.

The storage unit 14 is composed of a readable/writable storage medium and a drive device for reading/writing various kinds of information such as programs and data from/to the storage medium. The storage unit 14 can use a semiconductor memory such as a flash memory, as the storage medium. The storage unit 14 stores the first content and second content acquired by the acquisition unit 12.

The presentation unit 15 is reproduction means capable of reproducing visual data, auditory data and tactile data. The presentation unit 15 is realized, for example, by a display screen such as a liquid crystal display that reproduces visual data, speakers that reproduce auditory data, and an actuator or an electrode that reproduces tactile data. Note that the means for reproducing tactile data in the presentation unit 15 is included at least in the information terminal apparatus 1B on the user B side, the user B being a reproducer.

The input unit 16 is realized by character input keys, a touch panel or the like. The input unit 16 accepts an operation input to the application software displayed on the display screen of the presentation unit 15.

### [Configuration of shared server]

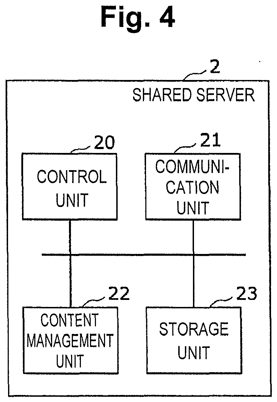

Next, a configuration of the shared server 2 shown in Fig. 4 will be described.

The shared server 2 is content sharing means constructed on the communication network such as the Internet, which enables various pieces of content to be shared by a large number of people via the network. As examples of the shared server 2, social media websites such as YouTube (registered trademark) that is a music/video sharing site and Instagram that is a picture/video sharing site (registered trademark) are given.

The shared server 2 receives the first content uploaded from the information terminal apparatus 1C and the second content uploaded from the information terminal apparatus 1A and stores the data of the pieces of content into a database and a directory. Further, the shared server 2 receives a content request transmitted from the information terminal apparatus 1B of the user B via the communication network.

As shown in Fig. 4, the shared server 2 is provided with a control unit 20, a communication unit 21, a content management unit 22 and a storage unit 23.

The control unit 20 is realized by a processor such as a CPU and a storage medium such as a ROM, a RAM and a flash memory, and executes various kinds of data processing according to a program stored in the storage medium or an external storage device.

The communication unit 21 is composed of a control device for connecting the shared server 2 and various kinds of external electronic equipment via the communication network.

The content management unit 22 manages content, such as the first content and the second content, in the storage unit 23. For example, when the second content is uploaded from the information terminal apparatus 1A, the content management unit 22 registers the uploaded second content with the storage unit 23. Further, the content management unit 22 stores the information indicating that the second content corresponds to the first content, in association with the second content stored in the storage unit 23.

The storage unit 23 is configured, for example, being provided with an HDD and stores the uploaded first content and second content.

### [Operation sequence of content sharing system]

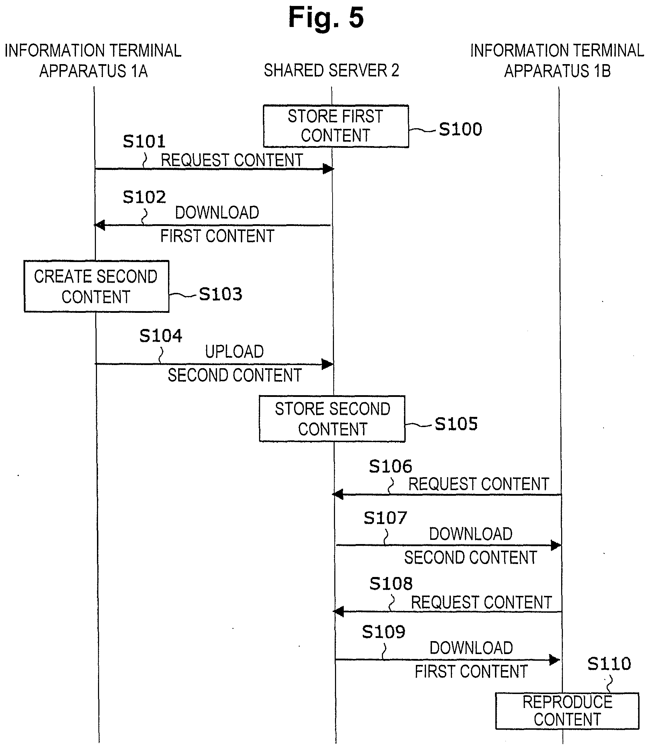

Next, an operation sequence of the content sharing system composed of the information terminal apparatuses 1A to 1C, the shared server 2 and the communication network, which have the above configurations, will be described with reference to Fig. 5.

First, it is assumed that the first content, which is video data, has been uploaded to the shared server 2 from the information terminal apparatus 1C of the user C and stored in the shared server 2 (step S100). The first content stored in the shared server 2 is shared on the network and can be accessed from any of the users. After that, the information terminal apparatus 1A on the user A side requests the first content from the shared server 2 via the communication network (step S101).

For example, in response to an instruction to search for the first content, which has been transmitted from the information terminal apparatus 1A, the control unit 20 of the shared server 2 acquires and reads the first content stored in the storage unit 23 and transmits the first content to the information terminal apparatus 1A (step S102). Specifically, the first content is downloaded from the shared server 2 to the information terminal apparatus 1A on the user A side. Note that the first content may be acquired by streaming instead of downloading.

After that, the second content which is tactile content coupled with the first content which is video data is created by the information terminal apparatus 1A on the user A side and stored into the storage unit 14 (step S103). Note that the identification information about the first content and information such as the URL where the first content is shared are added to the second content.

Next, the information terminal apparatus 1A uploads the second content to the shared server 2 via the communication network (step S104). Next, the shared server 2 stores the uploaded second content into the storage unit 23 (step S105). Thereby, the second content is shared on the network.

After that, the user B accesses the shared server 2 using the application software associated with the social media website of the shared server 2, which is installed in the information terminal apparatus 1B, and transmits an instruction to request the second content to the shared server 2 (step S106).

For example, the user B browses content on the social media website by operating the application software displayed on the display screen of the information terminal apparatus 1B, and inputs search conditions such as "video of fireworks; tactile" and the like. Then, the control unit 20 of the shared server 2 searches for content based on the search conditions, and generates and outputs a list display of a search result or the like. At this time, information about the first content and information about the second content are displayed in text and the like as the search result displayed on the display screen of the information terminal apparatus 1B. However, as data of content, only data of the second content exists, being associated with the information of the search result.

Next, the shared server 2 transmits the data of the second content to the information terminal apparatus 1B via the communication network, based on the instruction to request the second content, which has been transmitted from the information terminal apparatus 1B. In other words, the information terminal apparatus 1B downloads the second content from the shared server 2 (step S107). Note that the information terminal apparatus 1B may acquire the second content from the shared server 2 by streaming.

When having downloaded the second content from the shared server 2, the information terminal apparatus 1B requests the first content from the shared server 2 based on the identification information about the first content included in the second content (step S108). After that, the information terminal apparatus 1B downloads the first content from the shared server 2 via the communication network (step S109). Note that the information terminal apparatus 1B may acquire the first content from the shared server 2 by streaming.

Next, the first content and the second content are simultaneously reproduced on the information terminal apparatus 1B (step S109). For example, when a reproduction button of a file titled "Tactile fireworks video" is pressed by an operation of the user B on the application software associated with the social media website of the shared server 2, reproduction of the first content is executed simultaneously with reproduction of the downloaded second content. Thereby, video content and tactile content are simultaneously reproduced on the information terminal apparatus 1B, and the user B can have a desired experience as if the first content and the second content were one piece of content.

Note that, when the first content and the second content are reproduced on the information terminal apparatus 1B in combination with each other, the first content can be coupled with the second content based on information such as a reproduction time, brightness information and sound volume of the first content.

As described above, according to the content sharing system according to the first embodiment, only the data of the second content corresponding to the first content, which is existing content, is uploaded to the shared server 2 from the information terminal apparatus 1A on the user A side, the user A having created the second content, and is shared on the network. Meanwhile, as for the user B who is a reproducer, each of the first content and the second content is acquired by the information terminal apparatus 1B, and the pieces of content are simultaneously reproduced on the information terminal apparatus 1B.

Therefore, on the information terminal apparatus 1A on the user A side, the process of creating such content that the second content is embedded in the existing first content and uploading the content to the shared server 2 is not needed. The information terminal apparatus 1A on the user A side shares only original content on the network, and, meanwhile, a reproducer can reproduce the content in which the existing first content and the original second content are combined.

### [Second embodiment]

Next, a second embodiment of the present invention will be described. Note that, in the description below, the same components as components of the above first embodiment will be given the same reference numerals, and the description thereof will be omitted.

In the first embodiment, a description has been made on the case where the first content, which is existing content, has been uploaded to the shared server 2 by the user C in advance. In comparison, a content sharing system according to the second embodiment is different from the first embodiment in that the first content does not exist in the shared server 2 but is stored in shared servers 3 and 4 different from the shared server 2. A description will be made below mainly on components different from the components of the first embodiment.

Hereinafter, a description will be made on a case where the first content is music content which is auditory information, and the second content is tactile content coupled with the first content.

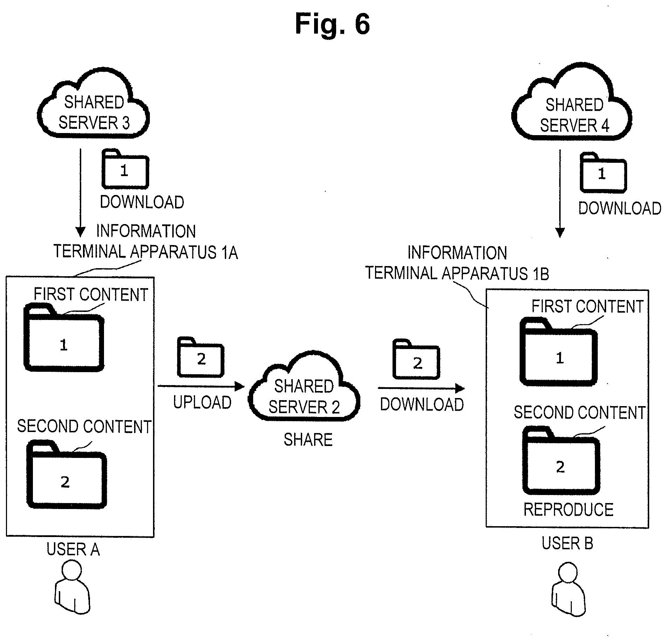

Fig. 6 is a configuration diagram illustrating an outline of the content sharing system according to the second embodiment. As shown in Fig. 6, the first content, which is existing content, has been stored in the shared server 3 and the shared server 4 in advance. Only the second content is stored in the shared server 2.

The information terminal apparatus 1A on the user A side downloads the first content from the shared server 3 via the communication network. The user A creates second content that is coupled with the first content. Then, the information terminal apparatus 1A uploads the created second content to the shared server 2 and shares the second content on the network.

The information terminal apparatus 1B on the user B side, the user B being a reproducer, accesses the shared server 2 via the communication network, retrieves the second content and downloads the second content from the shared server 2. Furthermore, the information terminal apparatus 1B acquires the first content from the shared server 4 by downloading or streaming, based on the information such as the URL of the first content included in the second content. After that, the information terminal apparatus 1B reproduces the first content and the second content in combination with each other. Thereby, music and the tactile content coupled with the music are experienced as one piece of content as a whole.

Each of the shared server 3 and the shared server 4 has a configuration similar to the configuration of the shared server 2 shown in Fig. 4. As examples of the shared servers 3 and 4, music/video sharing means such as YouTube (registered trademark) and a music distribution site such as Spotify (registered trademark) are given.

### [Operation sequence of content sharing system]

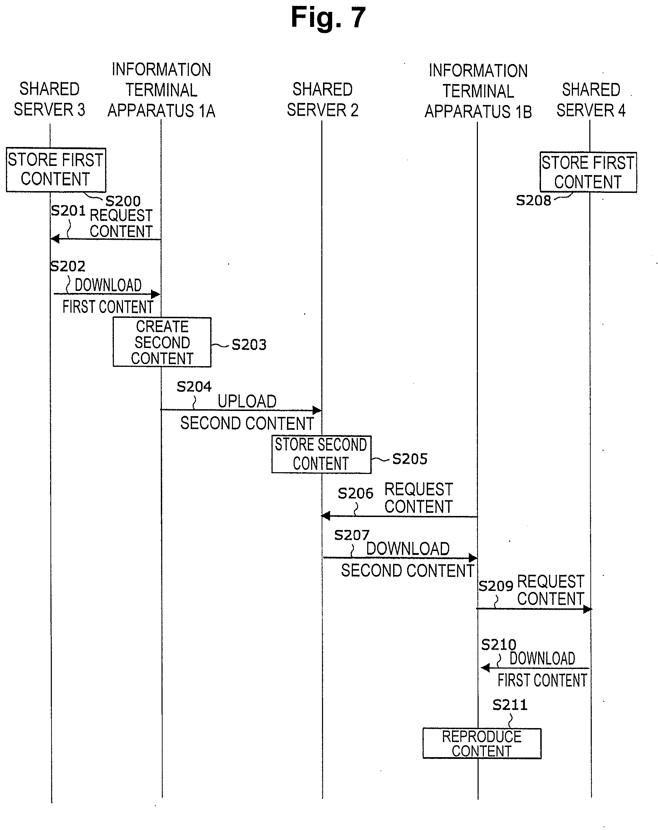

Next, an operation sequence of the content sharing system according to the present embodiment will be described with reference to Fig. 7.

First, the first content is stored in each of the shared server 3 and the shared server 4 (steps S200 and S201).

Next, the information terminal apparatus 1A on the user A side accesses the shared server 3 and transmits an instruction to request the first content (step S202). For example, a case where the user A has already purchased the first content on the shared server 3, which is a music distribution site, or is going to purchase the first content corresponds to the above.

Next, the information terminal apparatus 1A downloads the first content from the shared server 3 via the communication network (step S203). Note that the information terminal apparatus 1A may acquire the first content from the shared server 3 by streaming. After that, the user A creates second content which is such tactile content that is coupled with the first content, on the information terminal apparatus 1A (step S204). The information terminal apparatus 1A uploads the created second content to the shared server 2 via the communication network (step S205).

Note that, similarly to the first embodiment, the information terminal apparatus 1A adds information indicating that the second content corresponds to the first content when the second content is uploaded. For example, a musical composition title, "Musical Composition A", an artist's name, a songwriter's name, a reproduction time and the like, which are information identifying the first content, are set.

After that, the shared server 2 stores the second content (step S206). More specifically, the shared server 2 stores the second content and the information identifying the first content corresponding to the second content into the storage unit 23 in association with each other. Thereby, the second content is shared on the network.

After that, the information terminal apparatus 1B transmits a request for the second content to the shared server 2 (step S207). More specifically, the user B inputs search conditions, for example, "Musical Composition A that is tactile" on the application software displayed on the display screen of the information terminal apparatus 1B and associated with the social media website of the shared server 2.

The shared server 2 searches for content in the storage unit 23 based on the search conditions, and generates and outputs a content list including the second content as a search result. The second content is selected from the search result displayed on the display screen of the information terminal apparatus 1B on the user B side, and the second content is acquired from the shared server 2 (step S208).

The information terminal apparatus 1B accesses the shared server 4 and sends an instruction to request the first content, based on the information identifying the first content included in the downloaded second content (step S209). For example, when the user B has already purchased Musical Composition A, which is the first content, on the shared server 4, the information terminal apparatus 1B requests the first content from the shared server 4 based on the information identifying the first content and downloads the first content (step S210). Note that the information terminal apparatus 1B may acquire the first content by streaming.

If the first content that has been already purchased is stored in the storage unit 14 of the information terminal apparatus 1B, the control unit 10 of the information terminal apparatus 1B reads the first content from the storage unit 14.

On the other hand, if the user B has not purchased the first content on the shared server 4 yet and cannot acquire the first content, a display prompting purchase of the first content may be made on the display screen of the information terminal apparatus 1B.

After that, when a reproduction button of a file with a title of the second content, for example, "Musical Composition A that is tactile" is pressed by an operation of the user B on the information terminal apparatus 1B, reproduction of the first content is executed simultaneously with reproduction of the downloaded second content. Thereby, the musical composition content and the tactile content are simultaneously reproduced, and the user B can have a desired experience, that is, tactile content coupled with music (step S211).

As described above, according to the content sharing system according to the second embodiment, only the data of the second content corresponding to the first content, which is existing content, is uploaded to the shared server 2 from the information terminal apparatus 1A on the user A side, the user A having created the second content, and is shared on the network. Meanwhile, as for the user B who is a reproducer, the first content and the second content are separately acquired and simultaneously reproduced on the information terminal apparatus 1B.

Therefore, on the information terminal apparatus 1A on the user A side, the user A having created the second content, a process of transmitting such content that the second content is embedded in the existing first content to the shared server 2 to share the content on the network is not needed. Meanwhile, the user B, who is a reproducer, can reproduce content in which the existing first content and the original second content are combined.

The embodiments of the content sharing method and content sharing system of the present invention have been described above. However, the present invention is not limited to the described embodiments, but various kinds of modifications that one skilled in the art can conceive can be made within the scope of the invention described in Claims.

For example, though a description has been made on the case where tactile data is used as the second content in the described embodiments, the second content is not limited thereto. Note that it is preferable that the first content and the second content have different sensory modalities. For example, if the first content is video content, the second content may be content of music, tactility, smell or the like.

### Reference Signs List

- 1, 1A, 1B, 1C: Information terminal apparatus
- 2, 3, 4: Shared server
- 10: Control unit
- 11: Communication unit
- 12: Acquisition unit
- 13: Delivering unit
- 14: Storage unit
- 15: Presentation unit
- 16: Input unit
- 20: Control unit
- 21: Communication unit
- 22: Content management unit
- 23: Storage unit

## Claims

1. A content sharing method comprising:
a first acquisition step of acquiring first content;
a second acquisition step of acquiring second content stored in a first shared server and used in combination with the first content, via a communication network; and
a reproduction step of reproducing the first content and the second content in combination with each other.

2. A content sharing method comprising:
a first acquisition step of acquiring first content; and
a delivering step of delivering second content used in combination with the first content to a first shared server via a communication network; wherein
the second content includes information with which the first content can be identified.

3. The content sharing method according to claim 1 or 2, wherein
at the first acquisition step, the first content stored in the first shared server is acquired via the communication network.

4. The content sharing method according to claim 1 or 2, wherein
at the first acquisition step, the first content stored in a second shared server different from the first shared server is acquired via the communication network.

5. The content sharing method according to claim 1, wherein
at the reproduction step, the first content and the second content are reproduced in combination with each other by an information terminal apparatus; and
at the first acquisition step, the first content is acquired from a storage device included in the information terminal apparatus.

6. The content sharing method according to claim 2, wherein
at the delivering step, the second content is delivered to the first shared server by an information terminal apparatus; and
at the first acquisition step, the first content is acquired from a storage device included in the information terminal apparatus.

7. The content sharing method according to any one of claims 1 to 6, wherein
the first content and the second content include information with sensory modalities which are different from each other.

8. A content sharing system where a first
information terminal apparatus, a second information terminal apparatus and a first shared server are connected to each other via a communication network, wherein
the first information terminal apparatus comprises:
a first acquisition unit acquiring first content; and
a delivering unit delivering second content used in combination with the first content to the first shared server;
the first shared server comprises a storage unit storing the first content delivered from the first information terminal apparatus, and
is accessible from the first information terminal apparatus and the second information terminal apparatus via the communication network; and
the second information terminal apparatus comprises:
a second acquisition unit acquiring the first content;
a third acquisition unit acquiring the second content stored in the storage unit of the first shared server via the communication network; and
a reproduction unit reproducing the first content and the second content in combination with each other.
